(19) Europäisches Patentamt
European Patent Office
Office européen des brevets

(11) **EP 4 760 226 A1**

(12) **DEMANDE DE BREVET EUROPEEN**

(43) Date de publication:
**17.06.2026 Bulletin 2026/25**

(21) Numéro de dépôt: **25220580.2**

(22) Date de dépôt: **03.12.2025**

(51) Classification Internationale des Brevets (IPC):
***G01M 11/00*** (2006.01)　　　***G02B 6/30*** (2006.01)
***G02B 6/42*** (2006.01)

(52) Classification Coopérative des Brevets (CPC):
**G01M 11/33; G02B 6/30; G02B 6/42**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **16.12.2024　FR 2414231**

(71) Demandeur: **Commissariat à l'Energie Atomique
et aux Energies
Alternatives
75015 Paris (FR)**

(72) Inventeurs:
• **PEINKE, Emanuel**
**38054 Grenoble Cedex 09 (FR)**
• **GUERBER, Sylvain**
**38054 Grenoble Cedex 09 (FR)**
• **HASSAN, Karim**
**38054 Grenoble Cedex 09 (FR)**

(74) Mandataire: **Atout PI Laplace
Immeuble Up On
25 Boulevard Romain Rolland
CS 40072
75685 Paris Cedex 14 (FR)**

(54) **PLAQUE PHOTONIQUE AVEC DISPOSITIF DE TEST**

(57)　L'invention concerne une plaque photonique (PP) comprenant au moins un motif (MOT), un motif comprenant au moins une puce photonique dite fonctionnelle (PPf) et un dispositif de test (DT), le dispositif de test (DT) comprenant :
• un premier ensemble de test (E1t) comprenant :
o un premier coupleur par la tranche de test (EDC1t), dénommé premier coupleur test,
o un premier dispositif de couplage lumière/guide test (DC1t),
o un deuxième coupleur par la tranche de test (EDC2t), dénommé deuxième coupleur test,
o un deuxième dispositif de couplage lumière/guide test (DC2t),
o le premier et le deuxième coupleur test étant disposés symétriquement par rapport à un point O,

• un ensemble dit de référence (Er) comprenant un guide d'onde de référence (WGr) et un premier (DC1r) et un deuxième (DC2r) dispositif de couplage lumière/guide de référence,
• les premier (DC1t) et deuxième (DC2t) dispositifs de couplage lumière/guide test et les premier (DC1r) et deuxième (DC2r) dispositifs de couplage lumière/guide de référence étant tous identiques.

FIG.4

## Description

### DOMAINE DE L'INVENTION

Le domaine de l'invention est la photonique sur silicium, par exemple utilisée pour la télécommunication. L'invention concerne les plaques photoniques (« photonic wafer » en anglais) comprenant un ensemble de puces photoniques dans lesquelles sont intégrés des circuits photoniques, et leur caractérisation. Plus particulièrement l'invention concerne la caractérisation des coupleurs par la tranche permettant l'injection de la lumière dans le circuit et/ou la récupération de celle-ci en sortie du circuit.

### ETAT DE LA TECHNIQUE

S'agissant de centres de données, de calcul de haute performance, ou de 5G, la photonique sur silicium est essentielle pour avoir des flux de données à très haut débit, et la demande de débit ne fait qu'augmenter.

Toute solution photonique nécessite son intégration avec d'autres composants, optiques et/ou électroniques. Au niveau optique, une plaque ou puce photonique comprend un substrat Sub définissant un plan XY sur lequel est disposée une couche de gainage CL ou « cladding layer » en anglais. A l'intérieur de cette couche CL sont intégrées des guides d'onde configurés pour guider la lumière. Les guides s'étendent dans le plan XY.

Un exemple d'interface optique est l'interface de type fibre-puce. Ces interfaces fibre/puce connectent optiquement des puces photoniques (typiquement les guides d'onde) avec des fibres optiques afin d'envoyer des signaux dans les réseaux de communication et d'en recevoir. Afin de réaliser l'interface fibre/puce, différents types de coupleurs sont utilisés.

Un premier type de coupleur est le coupleur à réseau (« grating coupler » GC en anglais) réalisant un couplage dit vertical via la surface de la puce.

Un deuxième type de coupleur est le coupleur par la tranche ou « edge coupler » en anglais, dénommé dans le domaine EDC ou convertisseur de spot « Spot Size Converter » (SSC). L'utilisation d'EDC permet de limiter les pertes optiques de l'interface. En ce qui concerne les télécommunications optiques, la réduction de pertes optiques permet entre autres d'augmenter les distances de communication et/ou la bande passante, ou de réduire la consommation d'énergie des systèmes optiques. Les trois donnent un avantage commercial. Quant aux applications de photonique quantique, elles dépendent fortement de l'absence de pertes, et de nombreuses applications sont possibles uniquement avec de très faibles pertes dans le système optique dans son ensemble.

De nombreux types d'EDC et de fibres existent, souvent optimisés pour améliorer certaines performances. La publication de Riccardo Marchetti, et al., "Coupling strategies for silicon photonics integrated chips [Invited]," Photon. Res. 7, 201-239 (2019) donne un bon aperçu et explique des stratégies pour les assembler dans son dernier chapitre « 6. PACKAGING TECHNIQUES ».

Typiquement un EDC se compose d'une portion de guide d'onde WG0 et d'une extrémité EXT0 configurée pour adapter le mode optique se propageant dans le guide au mode de la fibre optique à laquelle il est couplé. A titre d'exemple la section d'un guide d'onde est typiquement inférieure au $\mu$m (200-900 nm) alors que le cœur d'une fibre optique présente un diamètre d'au moins de 5 $\mu$m. Un exemple d'EDC très utilisé dans la pratique sont les « taper » présentant une extrémité dont la section diminue progressivement, ce qui permet d'étaler le mode pour l'adapter à la fibre. Mais beaucoup d'autres types d'EDC existent, avec des formes et des structures variées (voir par exemple la publication Marchetti précitée).

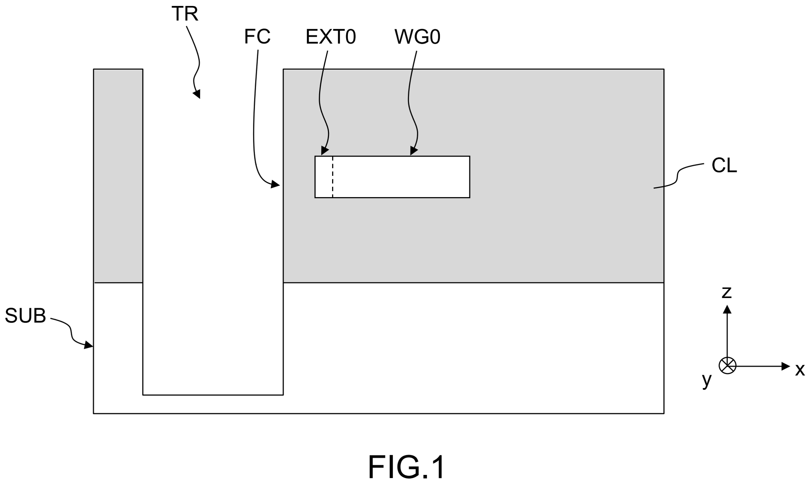

Le couplage par la tranche entre un EDC et une fibre s'effectue en creusant une tranchée TR dans la plaque photonique, tel qu'illustré figure 1. Ensuite la plaque peut éventuellement être découpée au niveau de la tranchée TR afin de rendre la facette FC plus accessible. On a conservé ici une petite épaisseur de couche de gainage entre l'extrémité de l'EDC EXT0 et la facette FC créée par la tranchée TR et permettant le couplage avec la fibre.

En pratique, il est difficile d'obtenir un couplage EDC-fibre à faibles pertes. Le système est très sensible au moindre désalignement, que ce soit en translation ou en angle. Les conditions d'un couplage parfait sont difficiles à obtenir. Pour un couplage parfait, les faisceaux lumineux guidés par la fibre et par l'EDC doivent être identiques et idéalement parfaitement superposés (c'est à dire que les modes respectifs se recouvrent), c'est-à-dire que leur forme, taille de mode, axe de propagation, ainsi que le front d'onde qui décrit localement la phase de la lumière, doivent être identiques et parfaitement superposés (recouvrement des modes respectifs).

Les pertes mesurées lors d'un couplage EDC-fibre se composent de pertes liées à un couplage non-parfait, de pertes intrinsèquement liées à l'EDC, et d'autres pertes. Ainsi, les pertes mesurées lors d'un couplage EDC-fibre sont donc la somme des pertes dues à : (i) un recouvrement partiel entre les modes de la fibre et de l'EDC (mauvaise conception et/ou désalignement entre la fibre et l'EDC), (ii) les pertes de propagation dans l'EDC (pertes intrinsèques) et (iii) aux interfaces entre la fibre et la puce (réflexions).

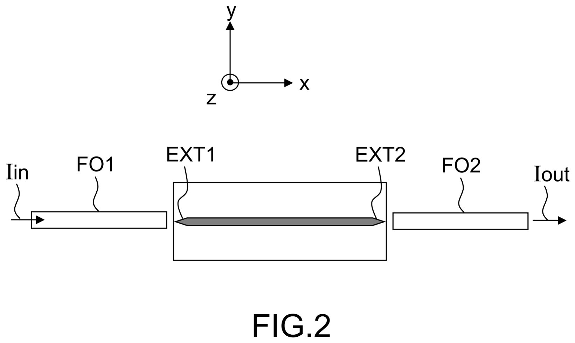

Pour tester les performances d'un couplage EDC-fibre, une approche largement appliquée par la communauté est l'utilisation d'un banc de caractérisation illustré figure 2. Ce banc comprend deux EDC connectés via la portion de guide d'onde, chacune extrémités EXT1, EXT2 étant couplée respectivement à une fibre associée FO1, FO2. Des nano-positionneurs permettent d'aligner les fibres en rapport avec les EDC et un microscope permet de visualiser l'alignement. Les pertes sont mesurées typiquement en réalisant le ratio d'une intensité $I_{out}$ en sortie d'une des fibres (FO2) et d'une intensité $I_{in}$ injectée dans l'autre fibre (FO1). Ces pertes, souvent exprimées en échelle logarithmique, correspondent à celles du système complet fibre-EDC plus guide d'onde plus EDC-fibre.

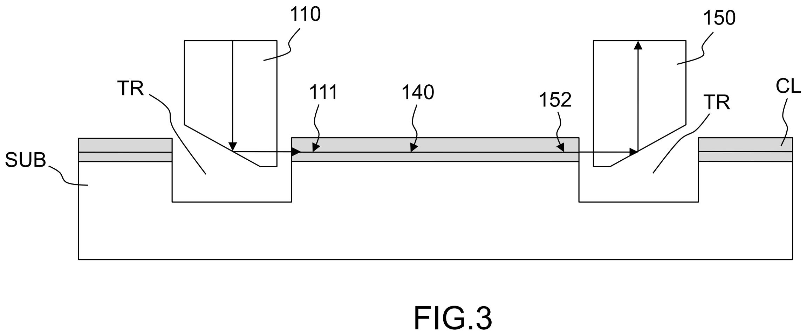

Le document WO 2020/132968 décrit une méthode de test avec des EDC, et comment connecter un ruban de fibres (110, 150) avec les EDC (111, 151) d'une structure photonique 140 d'une puce photonique, tel qu'illustré figure 3. Cette méthode a la particularité de pouvoir tester les composants optiques de la puce photonique à l'échelle d'un wafer entier, dont les EDC. L'utilisation de cette méthode permet de tester un ensemble composé d'EDC, de fibres et de structures photoniques, mais ne donne pas d'information sur l'EDC seul.

En effet dans la majorité des systèmes de test, comme dans celui de la figure 1, le résultat est influencé par de nombreux facteurs qui détériorent la précision de la mesure. Il peut y avoir un désalignement angulaire et/ou de translation, qui peut être amplifié par des vibrations souvent venant de l'extérieur. L'alignement est délicat et très sensible. La fibre optique elle-même contribue aux pertes. Les incertitudes liées à sa fabrication (taille de mode pouvant varier, état de surface de la fibre...) impactent la mesure. Dans un circuit commercial les fibres seraient collées à la puce ce qui amène également des incertitudes lors du test (état de la colle...) et le rend destructeur car il faut faire le collage pour mesurer. Dans le cas des fibres optiques n'intégrant pas de lentille, la distance de travail nominale est égale à zéro. Dans cette condition fibre et EDC devraient se toucher. Pratiquement ce n'est pas envisageable par risque d'abimer l'EDC ou la fibre. Le milieu entre la fibre et la puce impacte tout autant les performances de l'EDC.

Ainsi ces différentes méthodes présentent l'inconvénient de ne mesurer que des pertes globales, alors qu'il serait intéressant de caractériser les différents éléments séparément, et plus particulièrement de mesurer indépendamment les pertes intrinsèques de l'EDC.

Un but de la présente invention est de remédier aux inconvénients précités en proposant une plaque photonique intégrant un circuit de test permettant une mesure des pertes intrinsèque des EDC de la plaque.

**DESCRIPTION DE L'INVENTION**

La présente invention a pour objet une plaque photonique comprenant au moins un motif, un motif comprenant au moins une puce photonique dite fonctionnelle et un dispositif de test, une puce photonique fonctionnelle comprenant des circuits photoniques comprenant au moins un coupleur par la tranche fonctionnel et des guides d'ondes fonctionnels,

la plaque photonique comprenant un substrat selon un plan XY, une couche de gainage et des guides d'onde intégrés dans ladite couche de gainage,

le dispositif de test comprenant :

- un premier ensemble de test comprenant :

  o un premier coupleur par la tranche de test, dénommé premier coupleur test, comprenant un premier guide d'onde de test et une première extrémité,
  o un premier dispositif de couplage lumière/guide test,
  o **un deuxième** coupleur par la tranche de test, dénommé deuxième coupleur test, comprenant un deuxième guide d'onde de test et une deuxième extrémité,
  o un deuxième dispositif de couplage lumière/guide test,
  o le premier et le deuxième coupleur test étant identiques,
  o le premier et le deuxième coupleur test étant disposés symétriquement par rapport à un point O, la première et la deuxième extrémité se faisant face et étant séparées d'une première distance de séparation non nulle,

- un ensemble dit de référence comprenant un guide d'onde de référence et un premier et un deuxième dispositif de couplage lumière/guide de référence,

- les premier et deuxième dispositifs de couplage lumière/guide test et les premier et deuxième dispositifs de couplage lumière/guide de référence étant tous identiques.

Selon un mode de réalisation la puce fonctionnelle s'étend sur une zone dite fonctionnelle et le dispositif de test est disposé en dehors de ladite zone fonctionnelle.

Selon un mode de réalisation la première distance de séparation est égale à deux fois une distance nominale entre une extrémité d'un coupleur par la tranche fonctionnel et une fibre optique à laquelle ledit coupleur par la tranche fonctionnel est associé.

Selon une variante une tranchée a été gravée dans une zone de séparation entre la première extrémité et la deuxième extrémité.

Selon un mode de réalisation la tranchée est remplie avec un élément choisi parmi un matériau solide, un liquide, un gaz ou le vide.

Selon un mode de réalisation le substrat est en silicium, la couche de gainage est en oxyde de silicium et les guide d'onde en silicium ou en nitrure de silicium.

Selon le dispositif de test comprend en outre au moins un deuxième ensemble de test présentant une deuxième distance de séparation différente de la première distance de séparation.

Selon un mode de réalisation la plaque photonique comprend une pluralité de deuxièmes ensembles de test présentant chacun une distance de séparation différente des autres deuxièmes ensembles.

Selon un mode de réalisation le dispositif de test comprend en outre au moins un troisième ensemble de test, et le troisième ensemble de test est agencé de sorte que les extrémités desdits premier et deuxième coupleur test dudit troisième ensemble de test soient décalés selon l'axe Y d'une distance latérale associée.

Selon un mode de réalisation la plaque photonique comprend une pluralité de troisièmes ensembles de test présentant chacun une distance latérale associée différente des autres troisièmes ensembles.

Selon un mode de réalisation le dispositif de test comprend en outre au moins un quatrième ensemble de test, et le quatrième ensemble de test est agencé de sorte que les guides d'onde et les extrémités du premier et du deuxième coupleur test du quatrième ensemble font respectivement un angle α1 et -α1 avec l'axe X.

Selon un mode de réalisation la plaque photonique comprend une pluralité de quatrièmes ensembles de test présentant chacun une valeur d'angle α différente des autres quatrièmes ensembles.

Selon un mode de réalisation le premier ensemble, et le cas échéant les deuxième, troisième et quatrième ensemble, comprend une pluralité de premier et deuxième coupleurs test agencés en série, le deuxième dispositif de couplage lumière/guide test étant connecté au dernier deuxième coupleur test.

Selon un autre aspect l'invention concerne un procédé de test d'une plaque photonique avec un dispositif de test, la plaque photonique comprenant au moins un motif, un motif comprenant au moins une puce photonique dite fonctionnelle et ledit dispositif de test, une puce photonique fonctionnelle comprenant des circuits photoniques comprenant une pluralité de coupleurs par la tranche fonctionnels et des guides d'ondes fonctionnels, la plaque photonique comprenant un substrat selon un plan XY, une couche de gainage et des guides d'onde intégrés dans ladite couche de gainage, le procédé comprenant les étapes consistant à :

- **A** mesurer des pertes d'insertions dites de référence d'un ensemble référence comprenant un guide d'onde de référence et un premier et un deuxième dispositif de couplage lumière/guide de référence,

- **B** mesurer des pertes d'insertion dite globales d'un premier ensemble dit de test comprenant :

  o un premier coupleur par la tranche de test, dénommé premier coupleur test, comprenant un premier guide d'onde de test et une première extrémité,

  o un premier dispositif de couplage lumière/-guide test,

  o un deuxième coupleur par la tranche de test, dénommé deuxième coupleur test, comprenant un deuxième guide d'onde de test et une deuxième extrémité,

  o un deuxième dispositif de couplage lumière/-guide test,

  o le premier et le deuxième coupleur test étant identiques,

  o le premier et le deuxième coupleur test étant disposés symétriquement par rapport à un point O, la première et la deuxième extrémité se faisant face et étant séparées d'une première distance de séparation non nulle,

  o les premier et deuxième dispositifs de couplage lumière/guide test et les premier et deuxième dispositifs de couplage lumière/guide de référence étant tous identiques.

- **C** déterminer des pertes d'insertion intrinsèques du premier et/ou du deuxième coupleur test à partir des pertes d'insertion globales et des pertes d'insertion de référence.

Selon un mode de réalisation lesdites pertes d'insertion intrinsèques sont déterminées à l'étape **C** par la formule, en échelle logarithmique :

$$IL_{EDC} = (IL_{tot} - IL_{ref}) / 2$$

avec $IL_{EDC}$ pertes d'insertion intrinsèques, $IL_{tot}$ pertes d'insertion globales, $IL_{ref}$ pertes d'insertion de référence.

Selon un mode de réalisation le premier ensemble comprend une pluralité de 2N premier et deuxième coupleurs test agencés en série, le deuxième dispositif de couplage lumière/guide test étant connecté au dernier deuxième coupleur test, et lesdites pertes d'insertion intrinsèques sont déterminées à l'étape C par la formule, en échelle logarithmique :

$$IL_{EDC} = (IL_{tot} - IL_{ref}) / 2N$$

avec $IL_{EDC}$ pertes d'insertion intrinsèques, $IL_{tot}$ pertes d'insertion globales, $IL_{ref}$ pertes d'insertion de référence.

Selon un autre l'invention concerne un procédé de fabrication d'au moins une puce photonique fonctionnelle comprenant :

- une étape de fabrication d'une plaque photonique selon l'un des aspects de l'invention, l'au moins une puce fonctionnelle s'étendant sur une zone dite fonctionnelle, et le dispositif de test étant disposé en dehors de ladite zone fonctionnelle,
- une étape consistant à la mise en œuvre du procédé de test de ladite plaque photonique selon un autre aspect de l'invention,

- une étape de découpe de ladite au moins une puce fonctionnelle selon une ligne de découpe ne traversant pas le dispositif de test.

Selon un mode de réalisation lequel l'étape de fabrication de la plaque photonique comprend une sous étape de gravure de tranchées dans une zone de séparation entre la première extrémité et la deuxième extrémité du premier ensemble du dispositif de test, et une sous étape de gravure de tranchées dans ladite au moins une puce fonctionnelle pour un couplage avec les coupleurs par la tranche fonctionnels, les deux sous étapes de gravure étant réalisées avec la même technologie de gravure.

La description suivante présente plusieurs exemples de réalisation du dispositif de l'invention: ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre une plaque photonique présentant une tranchée permettant un couplage lumière/guide d'onde par la tranche.

La figure 2 déjà citée illustre un banc de caractérisation d'un système EDC-fibre selon l'état de l'art.

La figure 3 déjà citée illustre une méthode de test d'un ensemble composé d'EDC et de fibres permettant une caractérisation à l'échelle d'une plaque entière selon l'état de l'art.

La figure 4 illustre une plaque photonique intégrant un dispositif de test selon l'invention.

La figure 5 illustre une variante de l'invention dans laquelle le dispositif de test comprend des tranchées.

La figure 6 illustre un mode de réalisation du dispositif de test selon l'invention sans tranchée permettant l'évaluation d'un effet d'éloignement/rapprochement des deux extrémités selon l'axe X.

La figure 7 illustre un mode de réalisation du dispositif de test selon l'invention avec tranchée permettant l'évaluation d'un effet d'éloignement/rapprochement des deux extrémités selon l'axe X.

La figure 8 illustre un mode de réalisation du dispositif de test selon l'invention sans tranchée permettant de quantifier l'effet d'un désalignement perpendiculairement à l'axe X.

La figure 9 illustre un mode de réalisation du dispositif de test selon l'invention avec tranchée permettant de quantifier l'effet d'un désalignement perpendiculairement à l'axe X.

La figure 10 illustre un mode de réalisation du dispositif de test selon l'invention sans tranchée permettant de quantifier l'effet d'un désalignement angulaire par rapport à l'axe X.

La figure 11 illustre un mode de réalisation du dispositif de test selon l'invention avec tranchée permettant de quantifier l'effet d'un désalignement angulaire par rapport à l'axe X.

La figure 12 illustre un exemple de combinaison des modes de réalisations illustrés sur les figures 7, 9 et 11.

La figure 13 illustre un mode de réalisation du dispositif de test selon l'invention dans lequel une pluralité de couple de coupleurs test sont disposés en série.

**DESCRIPTION DETAILLEE DE L'INVENTION**

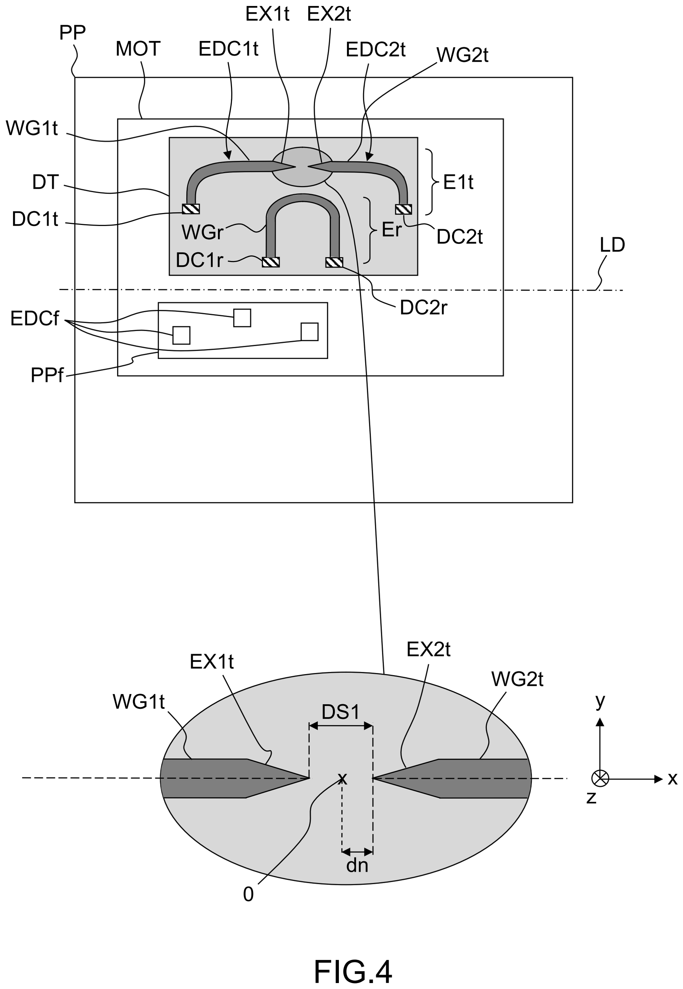

La figure 4 décrit une plaque photonique PP selon l'invention. La plaque photonique est l'équivalent d'un wafer électronique pour la fabrication de circuits. Elle comprend au moins un motif MOT, un motif comprenant au moins une puce photonique dite fonctionnelle PPf et un dispositif de test DT. La fabrication de la plaque complète (également dénommée « wafer photonique ») s'opère typiquement en dupliquant le motif. Les puces photoniques fonctionnelles PPf comprennent un ensemble de circuits photoniques, un circuit photonique comprenant au moins un coupleur par la tranche fonctionnel EDCf et des guides d'ondes fonctionnels (WGf). Une puce photonique fonctionnelle peut également comprendre d'autres structures photoniques. On entend par « fonctionnel » des éléments destinés à être utilisés pour l'application souhaitée de la puce ou du circuit. Le dispositif de test est classiquement intégré à une puce de test dans laquelle sont concentrés tous les systèmes de test.

Classiquement la plaque photonique comprend un substrat SUB selon un plan XY, une couche de gainage CL et des guides d'onde intégrés dans la couche de gainage.

Les coupleurs EDCf représentés sur la figure 4 à titre d'exemple sont des « taper », mais le dispositif de test (et les puces photoniques fonctionnelles) peut comprendre n'importe quel type de EDC.

En plus des éléments fonctionnels, un motif de la plaque comprend un dispositif de test DT comprenant un premier ensemble de test E1t et un ensemble dit de référence Er.

Le premier ensemble de test comprend un premier coupleur par la tranche de test EDC1t, dénommé premier coupleur test, comprenant un premier guide d'onde de test WG1t et une première extrémité EX1t et un deuxième coupleur par la tranche de test EDC2t, dénommé deuxième coupleur test, comprenant un deuxième guide d'onde de test WG2t et une deuxième extrémité EX2t.

L'ensemble ET1 comprend également un premier dispositif de couplage lumière/guide test DC1t et un deuxième dispositif de couplage lumière/guide test DC2t, respectivement associés à WG1t et WG2t. On entend par dispositif de couplage lumière/guide un coupleur permettant d'injecter ou de récupérer de la lumière dans le guide d'onde associé. Ces dispositifs de couplage lumière/guide test peuvent être de n'importe quel type, couplage vertical (réseau) ou par la tranche.

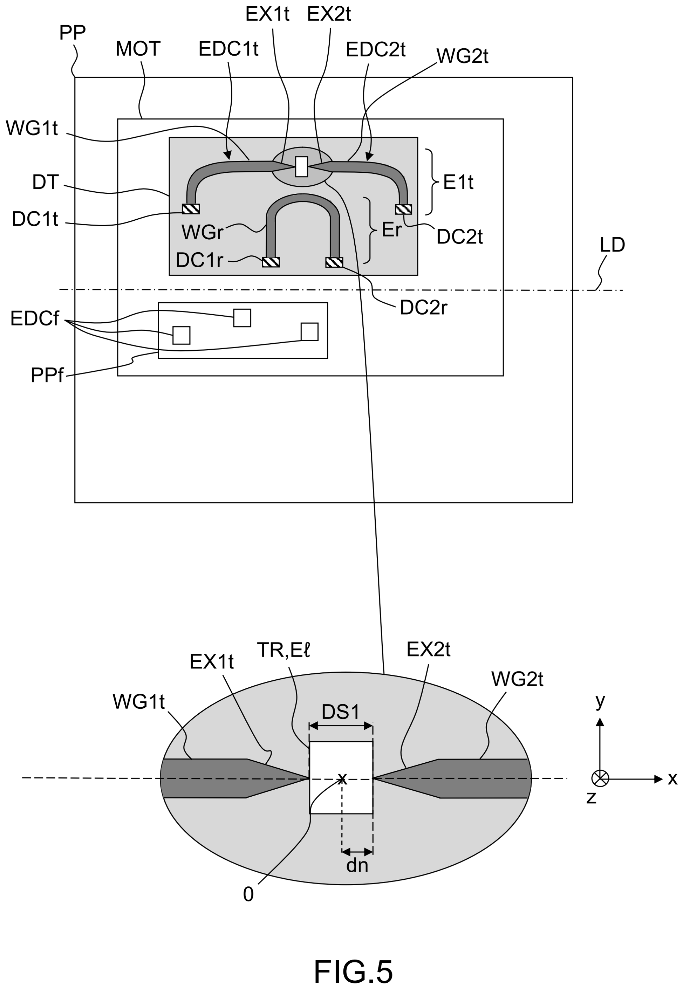

Selon un mode de réalisation le premier ensemble de test comprend également un premier guide d'onde intermédiaire entre le premier dispositif de couplage lumière/guide DC1t et le premier guide d'onde de test WG1t, et le deuxième ensemble de test comprend également un deuxième guide d'onde intermédiaire entre le deuxième dispositif de couplage lumière/guide DC2t et le deuxième guide d'onde de test WG2t. Préférentiellement Il s'agit d'un prolongement des guides d'onde WG1t/WG2t pouvant présenter des parties non rectilignes, pour des commodités de design, tel qu'illustré figures 4 et 5.

Le premier et le deuxième coupleur test EDC1t et EDC2t sont identiques, c'est-à-dire qu'ils présentent une forme identique et sont réalisés dans un matériau identique.

Préférentiellement, pour que la caractérisation effectuée avec le dispositif DT soit la plus représentative possible, les coupleurs test EDC1t et EDC2t sont identiques à un coupleur par la tranche fonctionnel EDCf. Ainsi les résultats du test effectué à partir de EDC1t et EDC2t correspondent aux performances de coupleurs présents sur les puces fonctionnelles PPf.

Le premier et le deuxième coupleur test EDC1t et EDC2t sont disposés symétriquement par rapport à un point O, la première extrémité EX1t et la deuxième extrémité EX2t se faisant face et étant séparées d'une première distance de séparation DS1 non nulle, comme illustré figure 4. Le bas de la figure 4 correspond à un zoom dans la zone autour des deux extrémités. Les coupleurs EDC1t et EDC2t s'étendent selon un axe X, et les guides auxquels ils sont connectés évoluent ensuite dans le plan XY. La distance de séparation DS1 est choisie représentative du double de la distance nominale d'utilisation d'un coupleur fonctionnel, c'est-à-dire du double de la distance entre une fibre optique et un coupleur fonctionnel.

La lumière injectée par exemple par DC1t, se propage dans le premier guide d'onde intermédiaire lorsqu'il existe, dans EDC1t, d'abord dans la portion de guide WG1t puis dans l'extrémité EX1t qui est configurée, comme expliqué plus haut, pour adapter le mode de la lumière se propageant dans le guide typiquement en l'élargissant. La lumière se propage dans la zone intermédiaire entre les deux extrémités puis se couple ensuite au coupleur EDC2t via l'extrémité EX2t, se propage dans WG2t (puis dans le deuxième guide d'onde intermédiaire lorsqu'il existe), puis est extraite du guide via DC2t. Ainsi DC1t est utilisé comme entrée de lumière et DC2t comme sortie pour le premier ensemble de test E1t. Aucune fibre n'intervient ici pour le trajet de la lumière entre DC1t et DC2t.

Le dispositif de test DT comprend également un ensemble dit de référence Er comprenant un guide d'onde de référence WGr et un premier dispositif de couplage lumière/guide de référence DC1r et un deuxième dispositif de couplage lumière/guide de référence DC2r. DC1 r est utilisé comme entrée de lumière et DC2t comme sortie dans l'ensemble de référence Er.

La lumière injectée par exemple par DC1r se propage dans WGr puis est récupérée dans DC2r.

Pour la mise en œuvre du test des coupleurs EDC1t/EDC2t, on mesure les pertes d'insertions $IL_{ref}$ dites de référence de l'ensemble référence et on mesure les pertes d'insertion dite globales $IL_{tot}$ du premier ensemble de test E1t. On détermine ensuite les pertes d'insertion intrinsèques $IL_{EDC}$ du premier ou du deuxième coupleur test (ces deux coupleurs sont identiques, et préférentiellement choisis identiques aux coupleurs fonctionnels de la puce fonctionnelle), à partir des pertes d'insertion globales et des pertes d'insertion de référence.

La mesure est réalisée avec une lumière présentant une longueur d'onde utilisée dans la puce fonctionnelle, par exemple $\lambda$ = 915 nm, 1310 nm, ou 1550 nm.

Afin de pouvoir comparer $IL_{ref}$ et $IL_{tot}$, les premier et deuxième dispositifs de couplage lumière/guide test DC1t, DC2t, et les premier et deuxième dispositifs de couplage lumière/guide de référence DC1r, DC2r, sont tous identiques (même type, paramètres, technologie...). Par exemple ces quatre coupleurs sont des coupleurs à réseau.

Le guide d'onde de référence WGr présente typiquement une section et un matériau identique à ceux des guides d'onde WG1t/WG2t. En outre, en présence d'un premier et d'un deuxième guide d'onde intermédiaire dans l'ensemble de test E1t, le guide d'onde de référence de l'ensemble de référence reprend également dans sa structure les caractéristiques de ces guides intermédiaires. L'idée est que le guide d'onde référence WGr présente une structure, en termes de section et de matériau, proche et si possible équivalente à celle des guides d'onde de l'ensemble de test. Préférentiellement la forme de WGr correspond à celle qu'auraient les deux guides d'ondes de l'ensemble de test mis bout à bout, sans les extrémités de EDC1t et EDC2t.

Ainsi typiquement les deux ensembles E1t et Er sont constitués de composants identiques, à la seule différence de la présence des deux extrémités des EDC de test EDC1t et EDC2t séparés de la distance DS1 pour E1t. Comme il s'agit deux fois du même EDC, on peut calculer les pertes intrinsèques d'un seul EDC de test à partir de la formule (en échelle logarithmique) :

$$2 \times IL_{EDC} = IL_{tot} - I_{Lref}$$

Soit :

$$IL_{EDC} = (IL_{tot} - I_{Lref})/2$$

En intégrant le dispositif de test sur la plaque PP intégrant les puces fonctionnelles PPf, la plaque selon l'invention s'affranchit des contributions indésirables à la mesure des pertes du système de test de figure 2.

On attend d'un système EDC/fibre qu'il présente moins de pertes qu'un couplage d'une fibre avec un coupleur à réseau. Mais dans la réalité beaucoup de contributions différentes contribuent aux pertes globales d'un système tel qu'illustré figure 2: alignement de la fibre, medium entre fibre et EDC, propagation dans l'EDC, désalignement linéaire et angulaire, erreurs de fabrications... On recherche idéalement entre 0 et 0.5 dB de pertes pour le système EDC/fibre, mais concrètement on mesure jusqu'à 1.5 à 3 dB de pertes, soit beaucoup plus qu'attendu. Afin d'optimiser le système il est important de savoir d'où proviennent les pertes, et une mesure globale sur un système tel que celui de la figure 2 ne permet pas d'obtenir cette information.

Dans le dispositif DT selon l'invention, au lieu de mettre chaque EDC en face d'une fibre, les deux EDC de test (identiques) sont mis l'un en face de l'autre, en respectant une symétrie centrale, avec le même EDC des deux côtés du point fixe O. La connexion solide entre les deux EDC permet un positionnement parfait et statique. Le positionnement n'est plus perturbé par de légères vibrations du banc de test.

Le dispositif de test DT intégré à la plaque PP selon l'invention permet ainsi une mesure des pertes intrinsèques d'un coupleur par la tranche, isolées des contributions des autres éléments du système, contrairement aux mesures réalisées avec des dispositifs de test connus illustrés figure 2 ou 3. Cette mesure de $IL_{EDC}$ permise par le dispositif DT selon l'invention concerne uniquement l'EDC, et elle est précise et fiable.

En outre chaque fournisseur de puce d'optique intégrée qui utilise des EDCs comme interface a intérêt à spécifier leurs performances. Le dispositif DT intégré à une plaque ou à un motif permet une caractérisation précise des EDC. Il s'intègre dans l'ensemble des systèmes de test implantés sur la plaque et permet de vérifier le bon fonctionnement des puces fonctionnelles de la plaque.

Selon un mode de réalisation la longueur $L_{ref}$ du guide d'onde de référence est égale à la somme de la longueur du guide d'onde entre DC1t et EX1t et la longueur du guide d'onde entre DC2t et EX2t. La comparaison entre $IL_{tot}$ et $I_{Lref}$ présente alors une précision améliorée.

Selon un mode de réalisation également illustré figure 4 l'au moins une puce fonctionnelle PPf du motif MOT s'étend sur une zone dite fonctionnelle et le dispositif de test DT est disposé en dehors de la zone fonctionnelle. Cela est permis par la structure du dispositif de test, qui peut être totalement isolé des circuits de la puce. Ainsi le fabricant qui reçoit la plaque PP peut effectuer si besoin les tests avec le circuit DT, puis séparer la ou les puces par découpe, selon par exemple une ligne de découpe LD illustrée figure 4.

Selon un mode de réalisation la première distance de séparation DS1 est égale à deux fois la distance nominale dn entre l'extrémité d'un coupleur par la tranche fonctionnel EDCf et une fibre optique à laquelle le coupleur par la tranche fonctionnel est associé. La reproduction, par le dispositif de test selon l'invention, de la situation réelle de couplage dans une puce fonctionnelle est alors améliorée.

Selon une variante illustrée figure 5, une tranchée TR a été gravée dans la zone de séparation entre la première extrémité EX1t et la deuxième extrémité EX2t. La tranchée TR est dépourvue de couche de gainage CL, et peut également être creusée, partiellement ou totalement, dans le substrat SUB. La tranchée peut s'étendre sur tout l'espace entre les deux extrémités ou une petite épaisseur de « cladding » peut être conservée en contact avec chacune des extrémités. Ce dernier cas correspond à la réalité technologique. Préférentiellement la technologie de gravure utilisée pour réaliser la tranchée du dispositif de test est identique à celle avec laquelle sont réalisées les tranchées dans les puces fonctionnelles.

Ces tranchées profondes (100 $\mu$m est une valeur typique) sont très couramment utilisées pour définir la face de l'EDC (voir figure 1). En intégrant une tranchée entre les deux EDCt, on crée un état de surface proche de la situation réelle d'un couplage fibre/coupleur fonctionnel EDCf.

Selon un mode de réalisation la tranchée TR est remplie avec un élément EI choisi parmi un matériau solide, un liquide, un gaz ou le vide. Préférentiellement l'élément EI est identique à celui utilisé pour les tranchées fonctionnelles permettant le couplage d'un coupleur par la tranche fonctionnel EDCf d'une puce fonctionnelle PPf de la plaque PP avec une fibre optique associée.

Intégrer une tranchée entre les deux EDC de test permet ainsi d'extraire les performances intrinsèques d'un EDC en condition d'utilisation réelles, et préférentiellement d'un EDC fonctionnel en condition d'utilisation réelles, pour le cas où on a choisi des EDC de test identiques aux EDC fonctionnels.

Selon un mode de réalisation le matériau de la tranchée est un liquide d'indice ou une colle.

A titre d'exemple le substrat de la plaque PP est en silicium, la couche de gainage CL est en oxyde de silicium $SiO_2$ et les guide d'onde en silicium Si ou en nitrure de silicium $Si_xN_y$.

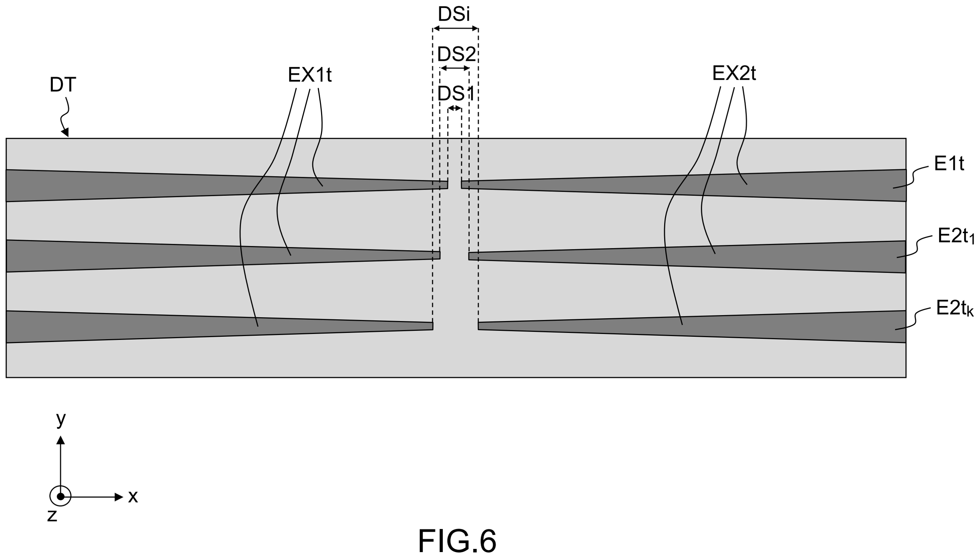

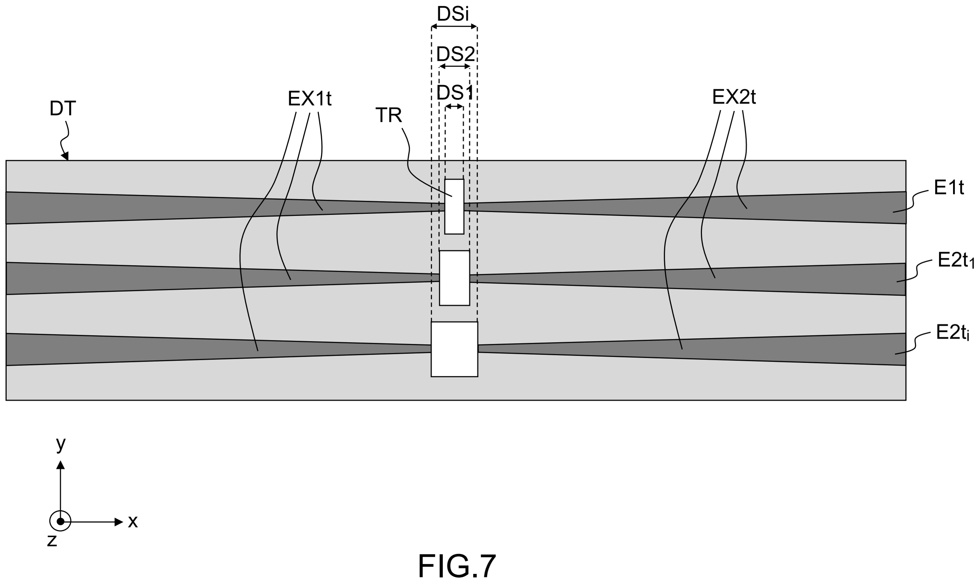

Selon un mode de réalisation de l'invention, applicable au dispositif de test sans ou avec tranchée, le dispositif de test DT comprend au moins un deuxième ensemble de test E2t1 présentant une deuxième distance de séparation DS2 différente de la première distance de séparation, tel qu'illustré figure 6 pour le dispositif de test sans tranchée et figure 7 pour la variante du dispositif de test avec tranchée.

La distance de séparation DS2 peut être nulle (applicable à la variante sans tranchée), ce qui permet de mesurer la performance du coupleur dans une configuration ou les deux extrémités se touchent.

Selon un mode de réalisation le dispositif DT comprend une pluralité de deuxièmes ensembles de test E2ti indicés i variant de 1 à n, présentant chacun une distance de séparation DSi différente des autres deuxièmes ensembles.

A titre d'exemple, pour le mode de réalisation de la figure 6, on réalise des ensembles (E1t et E2ti) avec des distances de séparation de 0.5, 2.5, 5, 7.5 et 10 $\mu$m.

La mesure des pertes intrinsèques associées $IL_{EDC}(i)$ permet de quantifier l'effet d'un éloignement/rapprochement des deux extrémités selon l'axe X, par rapport à la distance DS1 « de référence » du premier ensemble.

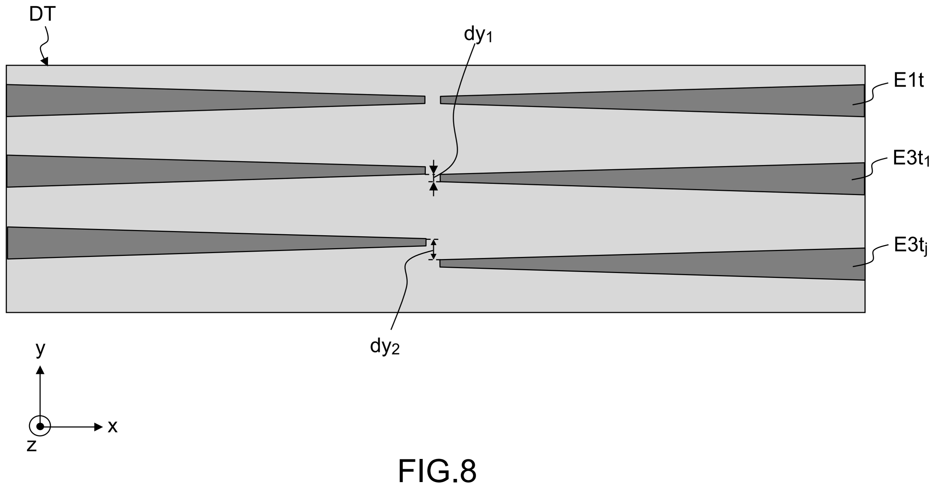

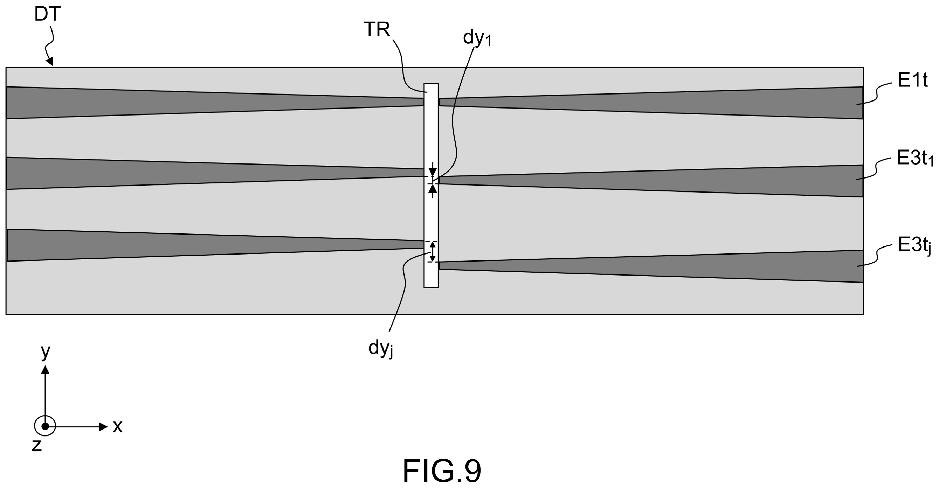

Selon un mode de réalisation de l'invention, applicable au dispositif de test sans ou avec tranchée, le dispositif de test DT comprend au moins un troisième ensemble de test E3t1, le troisième ensemble de test étant agencé de sorte que les extrémités des premier et deuxième coupleurs test du troisième ensemble de test soient décalées selon l'axe Y d'une distance latérale $dy_1$ associée. Ce mode de réalisation est illustré figure 8 pour le dispositif de test sans tranchée et figure 9 pour la variante du dispositif de test avec tranchée.

Pour le mode de réalisation de la figure 9, selon une option les différents ensembles partagent une même tranchée comme illustré figure 9.

Selon un mode de réalisation, comme illustré figures 8 et 9, le dispositif DT comprend une pluralité de troisième ensemble de test E3tj indicés j variant de 1 à m, présentant chacun une distance latérale associée $dy_j$ différente des autres troisièmes ensembles.

La mesure des pertes intrinsèques associées $IL_{EDC}(j)$ permet de quantifier l'effet d'un désalignement perpendiculairement à l'axe X, par rapport à la configuration alignée selon X du premier ensemble E1t.

Le dispositif de test illustré figure 8 ou 9, et les mesures associées $IL_{EDC}(j)$ en fonction de $dy_j$, permet également de quantifier le diamètre du mode, dénommé MFD pour « Mode Field Diameter » en anglais. Ce paramètre est très utile pour choisir une fibre avec un cœur approprié, c'est-à-dire avec un MFD similaire, afin de réduire les pertes de couplage EDC/fibre.

A titre d'exemple, pour le mode de réalisation de la figure 8, on réalise des ensembles (E1t et E3tj) avec des décalages latéraux de 0, 0.5, 1, 2, 3 et 5 $\mu$m.

Selon un mode de réalisation de l'invention, applicable au dispositif de test sans ou avec tranchée, le dispositif de test DT comprend au moins un quatrième ensemble de test E4t1, le quatrième ensemble de test étant agencé de sorte que les guides d'onde et les extrémités du premier et du deuxième coupleur test du quatrième ensemble font respectivement un angle $\alpha1$ et $-\alpha1$ avec l'axe X. Les premier et deuxième coupleurs test du quatrième ensemble ne sont alors plus disposés symétriquement au point O, et ne s'étendent plus tous les deux selon l'axe X.

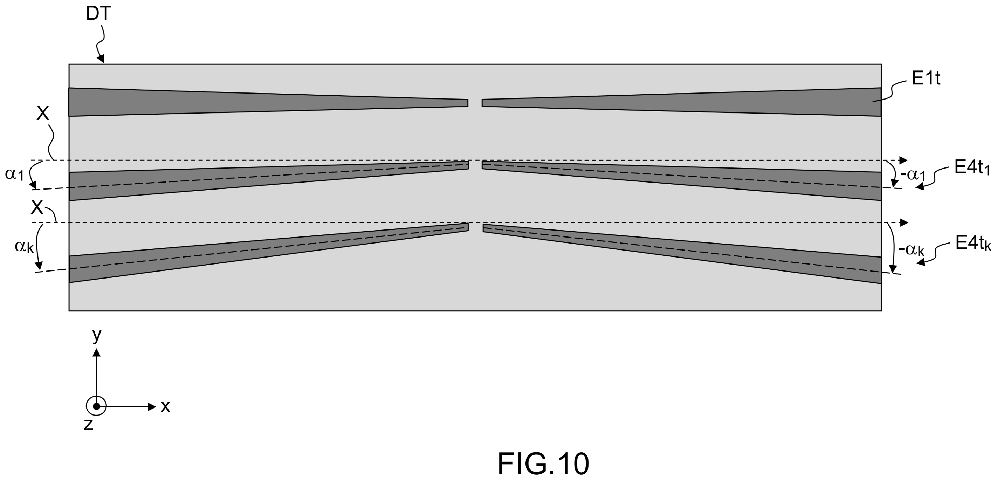

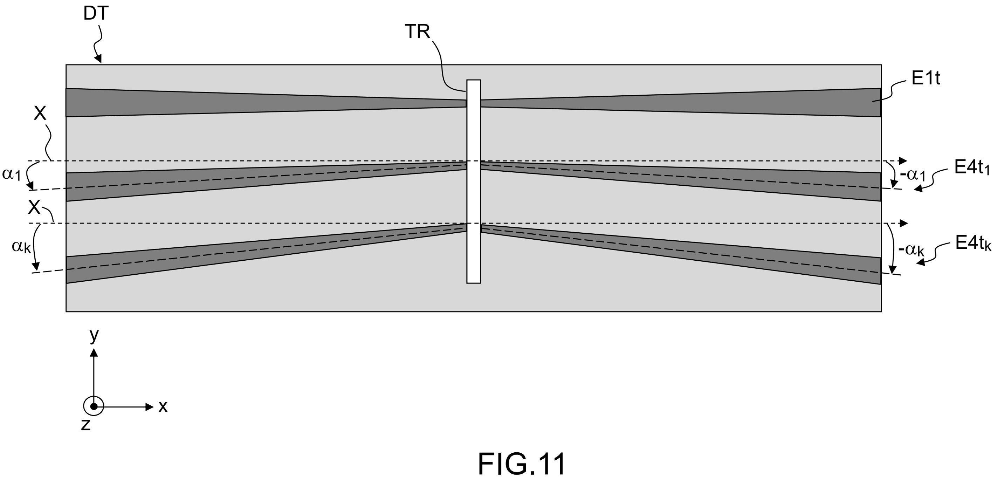

Ce mode de réalisation est illustré figure 10 pour le dispositif de test sans tranchée et figure 11 pour la variante du dispositif de test avec tranchée.

Pour le mode de réalisation de la figure 11, selon une option les différents ensembles partagent une même tranchée comme illustré figure 11.

Selon un mode de réalisation, comme illustré figures 10 et 11, le dispositif DT comprend une pluralité de quatrièmes ensembles de test E4tk indicé k variant de 1 à l, présentant chacun une valeur d'angle $\alpha k$ différente des autres quatrièmes ensembles.

La mesure des pertes intrinsèques associées $IL_{EDC}(k)$ permet de quantifier l'effet d'un désalignement angulaire par rapport à l'axe X, par rapport à la configuration alignée selon X du premier ensemble E1t.

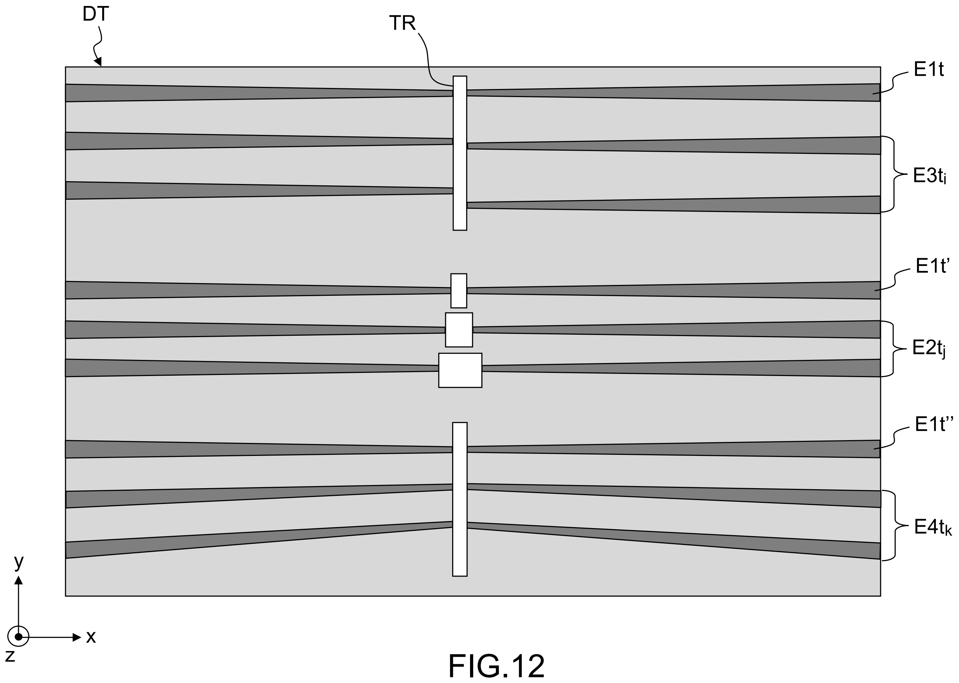

Les différents modes de réalisation illustrés sur les figures 6 à 11 peuvent bien entendu être combinés entre eux. A titre d'exemple la figure 12 illustre la combinaison des modes de réalisations des figures 7, 9 et 11, avec l'option d'une pluralité de premier ensemble E1t. Selon une autre option le dispositif DT ne comprend qu'un premier ensemble E1t, associés à plusieurs deuxièmes, et/ou troisièmes et/ou quatrièmes ensembles, sans et/ou avec tranchées.

Pour les modes de réalisation illustrés figures 6 à 12, l'ensemble de référence Er n'a pas été représenté.

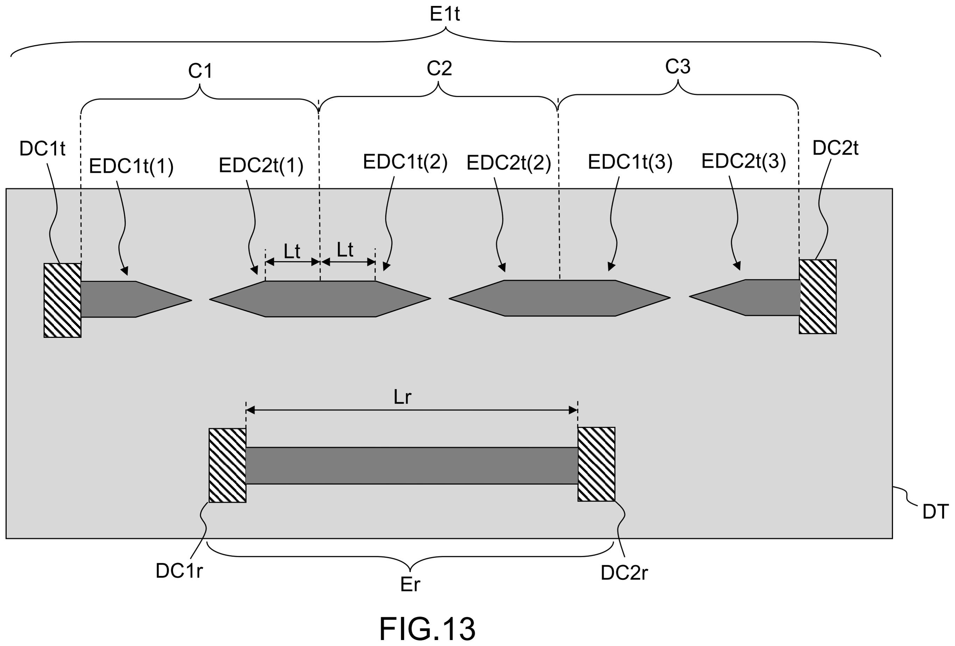

Selon un mode de réalisation illustré figure 13 le premier ensemble E1t comprend une pluralité de premier et deuxième coupleurs test agencés en série, le deuxième dispositif de couplage lumière/guide test DC2t étant connecté au dernier deuxième coupleur test. On a ainsi N nombre total de couples (EDC1t, EDC2t). La figure 13 illustre N=3 couples (EDC1t, EDC2t), identifiés couple Cm (EDC1t(m), EDC2t(m)) avec m numéro du couple allant de 1 à 3. Ce mode de réalisation est bien entendu applicable également aux deuxième, troisième et quatrième ensembles.

Soit Lt la longueur du guide d'onde entre le dispositif de couplage lumière/guide et l'extrémité associée de chacun des coupleurs test identiques, et $L_{ref}$ la longueur du guide d'onde de référence.

Préférentiellement on a :

$$L_{ref} = 2N.Lt$$

Selon un autre aspect l'invention concerne un procédé de test 100 d'une plaque photonique PP avec un dispositif de test DT tels que décrits précédemment.

Dans une première étape A on mesure des pertes d'insertions $IL_{ref}$ dites de référence de l'ensemble référence Er. Dans une deuxième étape B on mesure les pertes d'insertion dite globales $IL_{tot}$ du premier ensemble de test E1t. Les deux étapes A et B peuvent bien entendu être inversées dans le temps. Les mesures des pertes d'insertion sont typiquement effectuées à partir de mesures d'intensité en entrée et en sortie. Typiquement, il suffit de ne mesurer que les intensités de sorties. En utilisant le même système de mesure, les mêmes pertes s'ajoutent à $IL_{ref}$ et à $IL_{tot}$ et par conséquent ne modifient pas la différence $IL_{tot} - IL_{ref}$.

Enfin dans une étape C on détermine les pertes d'insertion intrinsèques $IL_{EDC}$ du premier et/ou du deuxième coupleur test (ils sont identiques) à partir des pertes d'insertion globales et des pertes d'insertion de référence.

Préférentiellement les pertes d'insertion intrinsèques $IL_{EDC}$ d'un EDCt sont déterminées par la formule, en échelle logarithmique (pour un couple (EDC1t, EDC2t)) :

$$IL_{EDC} = (IL_{tot} - IL_{ref}) / 2$$

Pour le mode de réalisation avec N couples de coupleurs test en série, la formule devient :

$$IL_{EDC} = (IL_{tot} - IL_{ref}) / (2 \times N)$$

Le procédé de test 100 est un test systématique d'EDCs post-fabrication de la plaque.

Pour les fabricants de plaques photoniques, il est attractif d'afficher les performances intrinsèques et de se servir des mesures de $IL_{EDC}$ réalisées selon le procédé 100 afin de quantifier $IL_{EDC}$ de leurs EDC. En effet les performances intrinsèques sont en général supérieures aux performances du système. Les performances intrinsèques $IL_{EDC}$ font par exemple partie de spécifications délivrées par le fabriquant de plaque ou par un vendeur de puces.

Selon encore un autre aspect l'invention concerne un procédé de fabrication d'au moins une puce photonique fonctionnelle PPf.

Dans une (première) étape on fabrique une plaque photonique PP telle que décrite précédemment, intégrant le dispositif de test DT. Les méthodes de fabrication d'une telle plaque sont connues de l'homme de l'art. La plaque est agencée de sorte que l'au moins une puce fonctionnelle PPF s'étende sur une zone dite fonctionnelle, et le dispositif de test DT étant disposé en dehors de la zone fonctionnelle. Cet agencement est permis car le dispositif de test est indépendant des circuits de la puce fonctionnelle.

Puis dans une étape on met en œuvre le procédé de test 100.

Dans une autre étape on découpe l'au moins une puce fonctionnelle PPF selon une ligne de découpe LD (voir figures 4 et 5) ne traversant pas le dispositif de test. Cela est permis du fait de la localisation du dispositif de test en dehors de la zone fonctionnelle. L'étape de découpe peut être mise en œuvre antérieurement ou postérieurement à l'étape de mise en œuvre du procédé de test.

Selon un mode de réalisation, l'étape de fabrication de la plaque photonique PP comprend une sous étape de gravure de tranchées dans la zone de séparation entre la première extrémité et la deuxième extrémité du premier ensemble du dispositif de test DT, et une sous étape de gravure de tranchées dans l'au moins une puce fonctionnelle pour un couplage avec les coupleurs par la tranche fonctionnels EDCf. Les deux sous étapes de gravure, pour libérer les EDCt et les EDCf, sont réalisées avec la même technologie de gravure.

Le dispositif de test DT, et le procédé de test 100 associé, sont ainsi représentatif des conditions réelles de couplage dans la puce fonctionnelle.

Préférentiellement les deux sous étapes de gravure n'en forment qu'une seule, la gravure étant réalisée en parallèle, simultanément sur tout le motif voire sur toute la plaque.

## Revendications

1. **Plaque** photonique (PP) comprenant au moins un motif (MOT), un motif comprenant au moins une puce photonique dite fonctionnelle (PPf) et un dispositif de test (DT), la puce photonique fonctionnelle dudit motif comprenant des circuits photoniques comprenant au moins un coupleur par la tranche fonctionnel (EDCf) et des guides d'ondes fonctionnels (WGf),

   la plaque photonique comprenant un substrat (SUB) selon un plan XY, une couche de gainage (CL) et des guides d'onde intégrés dans ladite couche de gainage, le dispositif de test (DT) dudit motif comprenant :

   • un premier ensemble de test (E1t) comprenant :

     o un premier coupleur par la tranche de test (EDC1t), dénommé premier coupleur test, comprenant un premier guide d'onde de test (WG1t) et une première extrémité (EX1t),
     o un premier dispositif de couplage lumière/guide test (DC1t),

o un deuxième coupleur par la tranche de test (EDC2t), dénommé deuxième coupleur test, comprenant un deuxième guide d'onde de test (WG2t) et une deuxième extrémité (EX2t),

o un deuxième dispositif de couplage lumière/guide test (DC2t),

o le premier et le deuxième coupleur test étant identiques,

o le premier et le deuxième coupleur test étant disposés symétriquement par rapport à un point O, la première et la deuxième extrémité se faisant face et étant séparées d'une première distance de séparation (DS1) non nulle,

• un ensemble dit de référence (Er) comprenant un guide d'onde de référence (WGr) et un premier (DC1r) et un deuxième (DC2r) dispositif de couplage lumière/guide de référence,

• les premier (DC1t) et deuxième (DC2t) dispositifs de couplage lumière/guide test et les premier (DC1r) et deuxième (DC2r) dispositifs de couplage lumière/guide de référence étant tous identiques.

2. Plaque photonique selon la revendication précédente dans laquelle la puce fonctionnelle s'étend sur une zone dite fonctionnelle et le dispositif de test (DT) est disposé en dehors de ladite zone fonctionnelle.

3. Plaque photonique selon l'une des revendications précédentes dans laquelle la première distance de séparation (DS1) est égale à deux fois une distance nominale (dn) entre une extrémité d'un coupleur par la tranche fonctionnel (EDCf) et une fibre optique à laquelle ledit coupleur par la tranche fonctionnel est associé.

4. Plaque photonique selon l'une des revendications précédentes dans laquelle une tranchée (TR) a été gravée dans une zone de séparation entre la première extrémité et la deuxième extrémité.

5. Plaque photonique selon la revendication précédente dans laquelle la tranchée est remplie avec un élément (El) choisi parmi un matériau solide, un liquide, un gaz ou le vide.

6. Plaque photonique selon l'une des revendications précédentes dans laquelle le substrat est en silicium, la couche de gainage est en oxyde de silicium ($SiO_2$) et les guide d'onde en silicium (Si) ou en nitrure de silicium ($Si_xN_y$).

7. Plaque photonique selon l'une des revendications précédentes dans laquelle le dispositif de test comprend en outre au moins un deuxième ensemble de test ($E2t_1$) présentant une deuxième distance de séparation (DS2) différente de la première distance de séparation.

8. Plaque photonique selon la revendication précédente, comprenant une pluralité de deuxièmes ensembles de test ($E2t_i$) présentant chacun une distance de séparation ($DSi$) différente des autres deuxièmes ensembles.

9. Plaque photonique selon l'une des revendications précédentes dans laquelle le dispositif de test comprend en outre au moins un troisième ensemble de test ($E3t_1$) et dans lequel le troisième ensemble de test est agencé de sorte que les extrémités desdits premier et deuxième coupleur test dudit troisième ensemble de test soient décalés selon l'axe Y d'une distance latérale ($dy_1$) associée.

10. Plaque photonique selon la revendication précédente, comprenant une pluralité de troisièmes ensembles de test ($E3t_j$) présentant chacun une distance latérale associée ($dy_j$) différente des autres troisièmes ensembles.

11. Plaque photonique selon l'une des revendications précédentes dans laquelle le dispositif de test comprend en outre au moins un quatrième ensemble de test ($E4t_1$), et dans lequel le quatrième ensemble de test est agencé de sorte que les guides d'onde et les extrémités du premier et du deuxième coupleur test du quatrième ensemble font respectivement un angle $\alpha 1$ et $-\alpha 1$ avec l'axe X.

12. Plaque photonique selon la revendication précédente, comprenant une pluralité de quatrièmes ensembles de test (E4tk) présentant chacun une valeur d'angle $\alpha$ ($\alpha k$) différente des autres quatrièmes ensembles.

13. Plaque photonique selon l'une des revendications précédentes dans laquelle le premier ensemble, et le cas échéant les deuxième, troisième et quatrième ensemble, comprend une pluralité de premier et deuxième coupleurs test agencés en série, le deuxième dispositif de couplage lumière/guide test (DC2t) étant connecté au dernier deuxième coupleur test.

14. Procédé de test (100) d'une plaque photonique (PP) avec un dispositif de test (DT), la plaque photonique comprenant au moins un motif (MOT), un motif comprenant au moins une puce photonique dite fonctionnelle (PPf) et ledit dispositif de test (DT),

la puce photonique fonctionnelle dudit motif comprenant des circuits photoniques comprenant une pluralité de coupleurs par la tranche fonctionnels (EDCf) et des guides d'ondes fonctionnels (WGf),

la plaque photonique comprenant un substrat (SUB) selon un plan XY, une couche de gainage (CL) et des guides d'onde (WG) intégrés dans ladite couche de gainage,

le procédé comprenant les étapes consistant à :

• **A** mesurer des pertes d'insertions ($IL_{ref}$) dites de référence d'un ensemble référence comprenant un guide d'onde de référence (WGr) et un premier (DC1r) et un deuxième (DC2r) dispositif de couplage lumière/guide de référence,

• **B** mesurer des pertes d'insertion dite globales ($IL_{tot}$) d'un premier ensemble dit de test (E1t) comprenant :

o un premier coupleur par la tranche de test (EDC1t), dénommé premier coupleur test, comprenant un premier guide d'onde de test (WG1t) et une première extrémité (EX1t),

o un premier dispositif de couplage lumière/guide test (DC1t),

o un deuxième coupleur par la tranche de test (EDC2t), dénommé deuxième coupleur test, comprenant un deuxième guide d'onde de test (WG2t) et une deuxième extrémité (EX2t),

o un deuxième dispositif de couplage lumière/guide test (DC2t),

o **le premier** et le deuxième coupleur test étant identiques,

o le premier et le deuxième coupleur test étant disposés symétriquement par rapport à un point O, la première et la deuxième extrémité se faisant face et étant séparées d'une première distance de séparation (DS1) non nulle,

o les premier (DC1t) et deuxième (DC2t) dispositifs de couplage lumière/guide test et les premier (DC1r) et deuxième (DC2r) dispositifs de couplage lumière/guide de référence étant tous identiques.

• C déterminer des pertes d'insertion intrinsèques ($IL_{EDC}$) du premier et/ou du deuxième coupleur test à partir des pertes d'insertion globales et des pertes d'insertion de référence.

15. Procédé selon la revendication précédente, dans lequel lesdites pertes d'insertion intrinsèques sont déterminées à l'étape C par la formule, en échelle logarithmique:

$$IL_{EDC} = (IL_{tot} - IL_{ref}) / 2$$

avec $IL_{EDC}$ pertes d'insertion intrinsèques, $IL_{tot}$ pertes d'insertion globales, $IL_{ref}$ pertes d'insertion de référence.

16. Procédé selon l'une des revendications 14 ou 15, dans lequel le premier ensemble comprend une pluralité de 2N premier et deuxième coupleurs test agencés en série, le deuxième dispositif de couplage lumière/guide test (DC2t) étant connecté au dernier deuxième coupleur test, et dans lequel lesdites pertes d'insertion intrinsèques sont déterminées à l'étape C par la formule, en échelle logarithmique:

$$IL_{EDC} = (IL_{tot} - IL_{ref}) / 2N$$

avec $IL_{EDC}$ pertes d'insertion intrinsèques, $IL_{tot}$ pertes d'insertion globales, $IL_{ref}$ pertes d'insertion de référence.

17. Procédé de fabrication d'au moins une puce photonique fonctionnelle (PPf) comprenant :

- une étape de fabrication d'une plaque photonique selon l'une des revendications 1 à 13, l'au moins une puce fonctionnelle s'étendant sur une zone dite fonctionnelle, et le dispositif de test (DT) étant disposé en dehors de ladite zone fonctionnelle,

- une étape consistant à la mise en œuvre du procédé de test de ladite plaque photonique selon l'une des revendications 14 à 16,

- une étape de découpe de ladite au moins une puce fonctionnelle selon une ligne de découpe (LD) ne traversant pas le dispositif de test.

18. Procédé selon la revendication précédente dans lequel l'étape de fabrication de la plaque photonique comprend une sous étape de gravure de tranchées dans une zone de séparation entre la première extrémité et la deuxième extrémité du premier ensemble du dispositif de test, et une sous étape de gravure de tranchées dans ladite au moins une puce fonctionnelle pour un couplage avec les coupleurs par la tranche fonctionnels, les deux sous étapes de gravure étant réalisées avec la même technologie de gravure.

FIG.1

FIG.2

EP 4 760 226 A1

FIG.3

FIG.4

FIG.5

FIG.6

EP 4 760 226 A1

FIG.7

FIG.8

FIG.9

E1t

E3t₁

E3tj

dy₁

TR

dyj

DT

x
y
z

FIG.10

FIG.11

FIG.12

EP 4 760 226 A1

FIG.13

EP 4 760 226 A1

# EP 4 760 226 A1

**RAPPORT DE RECHERCHE EUROPEENNE**

**Numéro de la demande**

EP 25 22 0580

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2020/033533 A1 (KHANNA AMIT [US] ET AL) 30 janvier 2020 (2020-01-30) * abrégé; revendication 1; figures 1,2,4a,4b,5,7a, 9-13 * * alinéas [0037] - [0045], [0050] - [0054] * ----- | 1-18 | INV. G01M11/00 G02B6/30 G02B6/42 |
| Y | Honardoost Amirmahdi: "Thin-fIlm Lithium Niobate Integrated Photonics on Silicon for Electro- and Nonlinear-optic Applications", Electronic Theses and Dissertations, 1 mai 2020 (2020-05-01), pages 1-176, XP055899817, University of Central Florida Extrait de l'Internet: URL:https://stars.library.ucf.edu/cgi/view content.cgi?article=1059&context=etd2020 [extrait le 2022-03-10] * abrégé; figures 1.9,5.1,5.2 * * page 13 * * page 120 - page 124 * ----- | 1-18 | |

**DOMAINES TECHNIQUES RECHERCHES (IPC)**

G01M
G02B

Le présent rapport a été établi pour toutes les revendications

| Lieu de la recherche | Date d'achèvement de la recherche | Examinateur |
|---|---|---|
| La Haye | 31 mars 2026 | Nelva-Pasqual, F |

EPO FORM 1503 03.82 (P04C02)

# ANNEXE AU RAPPORT DE RECHERCHE EUROPEENNE
# RELATIF A LA DEMANDE DE BREVET EUROPEEN NO.

EP 25 22 0580

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2026

| Document brevet cité au rapport de recherche | Date de publication | Membre(s) de la famille de brevet(s) | Date de publication |
|---|---|---|---|
| US 2020033533 A1 | 30-01-2020 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020132968 A

**Littérature non-brevet citée dans la description**

- **RICCARDO MARCHETTI et al.** Coupling strategies for silicon photonics integrated chips [Invited. *Photon. Res.*, 2019, vol. 7, 201-239